# FASCICULE DE BREVET EUROPEEN

(11) **EP 3 883 816 B1**
(45) Date de publication et mention de la délivrance du brevet: **11.01.2023**
(21) Numéro de dépôt: 19813108.8
(22) Date de dépôt: 24.10.2019
(51) Int. Cl.: B60Q 1/00, B60Q 1/26, B60Q 1/28, B60Q 1/30, F21S 41/50, F21S 43/50

(54) **BLOC OPTIQUE DE VÉHICULE À CATADIOPTRES FLOTTANT PAR RAPPORT À UN MASQUE**
OPTISCHE FAHRZEUGEINHEIT MIT IN BEZUG AUF EINE MASKE SCHWEBENDEN RETROREFLEKTOREN
VEHICLE OPTICAL UNIT HAVING RETROREFLECTORS FLOATING RELATIVE TO A MASK

(30) Priorité: 23.11.2018 FR 1871733
(43) Date de publication de la demande: 29.09.2021
(73) Titulaire: PSA Automobiles SA, 78300 Poissy (FR); Valeo Vision, 93012 Bobigny Cedex (FR)
(72) Inventeur: BORE, Michael, 25420 VOUJEAUCOURT (FR); SIMANDRE, Stephane, 28130 CHARTAINVILLIERS (FR); SCHULTE, Laurent, 25230 DASLE (FR); LELARGE, Olivier, 49000 ECOUFLANT (FR)
(86) Numéro de dépôt international: PCT/FR2019/052540
(87) Numéro de publication internationale: WO 2020/104737

(56) Documents cités:
- EP-A1- 2 988 059
- EP-A1- 3 388 732
- EP-A2- 2 080 948
- DE-A1-102006 046 167
- JP-A- 2015 185 480
- US-A1- 2011 255 298

## Description

### Domaine technique de l'invention

L'invention concerne les blocs optiques qui équipent certains véhicules, et plus précisément ceux qui assurent une fonction de catadioptre et au moins une autre fonction photométrique.

Dans ce qui suit, on entend par « fonction photométrique » aussi bien une fonction photométrique d'éclairage, qu'une fonction photométrique de signalisation.

### Etat de la technique

Certains véhicules, généralement de type automobile, comprennent au moins un (et généralement deux) bloc(s) optique(s) comportant un boîtier qui définit avec une glace, solidarisée à une partie avant, un espace interne. Cet espace interne loge fréquemment un masque qui comprend au moins une ouverture traversée par une pièce translucide, éventuellement colorée (en orange ou en rouge), placée en regard de la glace et participant à une fonction photométrique, comme par exemple une fonction d'indicateur de changement de direction (ou clignotant) ou une fonction de feu de stop.

Lorsque les contraintes d'architecture sont sévères à l'arrière d'un véhicule, il peut s'avérer difficile, voire impossible, d'implanter la fonction de catadioptre dans le pare-chocs ou bouclier arrière. On est alors obligé d'installer cette fonction de catadioptre, dont l'implantation est contraignante, à l'intérieur du bloc optique décrit ci-avant, généralement au-dessous de la fonction photométrique précitée.

Actuellement, lorsque l'on veut que la fonction de catadioptre soit en N parties (N ≥ 2) espacées légèrement les unes des autres à l'intérieur d'un bloc optique, par exemple pour un effet de style ou pour participer à une signature, on utilise N plaques indépendantes. Plus précisément, ces N plaques sont installées individuellement dans le boîtier du bloc optique, l'une après l'autre, contre la face du masque qui est orientée vers la glace, par exemple par collage ou soudage ou clippage. Cela augmente le nombre de pièces du bloc optique, et donc complique le montage et augmente la durée de ce dernier, et complexifie la gestion des stocks, en particulier lorsque les N plaques sont différentes. En outre, cela limite les possibilités d'effet de style, et notamment empêche de donner l'impression que les N plaques « flottent » par rapport au masque.

Des blocs optiques connus sont décrits dans les documents EP 3388732 A, EP 2080948 A et EP 2988059 A.

L'invention a donc notamment pour but d'améliorer la situation.

### Présentation de l'invention

Elle propose notamment à cet effet un bloc optique, tel que défini dans la revendication 1, destiné à équiper un véhicule, et comprenant un boîtier définissant avec une glace, solidarisée à une partie avant, un espace interne logeant un masque comprenant à un premier niveau au moins une première ouverture traversée par une première pièce translucide, placée en regard de la glace et participant à une première fonction photométrique.

Ce bloc optique se caractérise par le fait :
- que son masque comprend à un second niveau différent du premier niveau un méplat saillant en direction de la glace et comprenant N secondes ouvertures, avec N ≥ 2, et
- qu'il comprend aussi une deuxième pièce comprenant une embase placée derrière le méplat et sur laquelle sont érigées N plaques définissant des catadioptres et traversant respectivement les N secondes ouvertures afin d'être placées en regard de la glace au-dessous ou au-dessus de la première pièce.

La fonction de catadioptre étant désormais définie par N parties d'une unique pièce (à savoir la deuxième), le nombre de pièces à assembler pour constituer le bloc optique est donc réduit, ce qui simplifie son montage. En outre, on a désormais l'impression que les N plaques flottent par rapport au masque et donc à l'intérieur du bloc optique du fait qu'elles traversent ce masque.

Le bloc optique selon l'invention peut comporter d'autres caractéristiques qui peuvent être prises séparément ou en combinaison, et notamment :
- son masque peut comprendre N premières ouvertures traversées par N sous-parties de la première pièce au-dessous ou au-dessus desquelles sont placées respectivement les N plaques ;
- il peut comprendre une troisième pièce opaque et placée contre une face de l'embase, qui est opposée à une autre face de cette dernière placée contre le méplat, afin d'empêcher l'entrée dans l'embase de rayons lumineux participant à une seconde fonction photométrique au-dessous ou au-dessus de la deuxième pièce ;
   - sa deuxième pièce peut comprendre au moins deux premiers trous traversants placés en regard respectivement de seconds trous traversants correspondant définis dans la troisième pièce. Dans ce cas, le méplat peut comprendre au moins deux plots masqués, traversant respectivement les premiers et seconds trous traversants qui se correspondent, et comprenant chacun une extrémité libre écrasée contre une face arrière de la troisième pièce afin de masquer entièrement le second trou traversant correspondant et d'immobiliser étroitement et simultanément les deuxième et troisième pièces par rapport au méplat, tout en empêchant le passage vers l'embase de rayons lumineux participant à la seconde fonction photométrique ;
      - chaque extrémité libre d'un plot peut être écrasée par bouterollage ;
   - la seconde fonction photométrique peut, par exemple, être choisie parmi une fonction de feu de jour et une fonction de feu de position (plus généralement, il peut s'agir de n'importe quelle fonction de signalisation ou d'éclairage) ;
- N peut être égal à trois ;
- la première fonction photométrique peut, par exemple, être choisie parmi une fonction d'indicateur de changement de direction (ou clignotant) et une fonction de feu de stop (plus généralement, il peut s'agir de n'importe quelle fonction de signalisation ou d'éclairage) ;
- il peut constituer un feu arrière du véhicule.

L'invention propose également un véhicule, éventuellement de type automobile, et comprenant au moins un bloc optique du type de celui présenté ci-avant.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes et certains niveaux de gris), sur lesquels :
[Fig. 1] illustre schématiquement, dans une vue en perspective, une partie d'une aile de véhicule automobile équipée d'un exemple de réalisation d'un bloc optique selon l'invention,
[Fig. 2] illustre schématiquement, dans une vue en coupe dans un plan XZ, le bloc optique de la figure 1,
[Fig. 3] illustre schématiquement, dans une vue en perspective, la deuxième pièce du bloc optique des figures 1 et 2, et
[Fig. 4] illustre schématiquement, dans une vue en perspective, la troisième pièce du bloc optique des figures 1 et 2.

### Description détaillée de l'invention

L'invention a notamment pour but de proposer un bloc optique BO, destiné à équiper un véhicule V afin d'assurer une fonction de catadioptre et au moins une autre fonction photométrique.

On considère dans ce qui suit, à titre d'exemple non limitatif, que le véhicule V est de type automobile. Il s'agit par exemple d'une voiture. Mais l'invention n'est pas limitée à ce type de véhicule. En effet, un bloc optique BO selon l'invention peut équiper n'importe quel véhicule terrestre ou maritime (ou fluvial) devant comprendre une fonction de catadioptre et au moins une autre fonction photométrique.

Par ailleurs, on considère dans ce qui suit, à titre d'exemple non limitatif, que le bloc optique BO est un feu arrière. Mais l'invention n'est pas limitée à cette application. En effet, le bloc optique BO, selon l'invention, pourrait être un projecteur (ou phare) avant ou un feu avant.

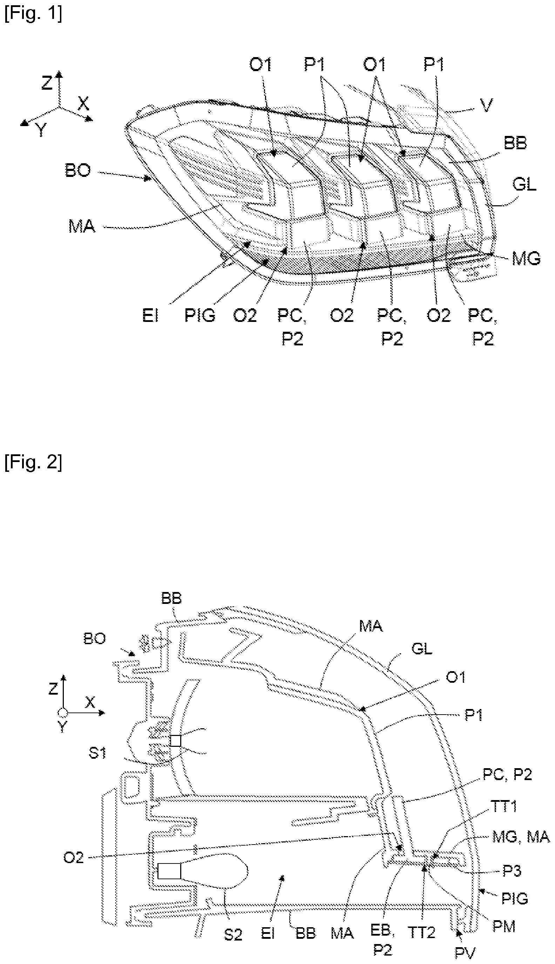

Sur les figures 1 à 4, la direction X est une direction dite longitudinale du fait qu'elle est parallèle à un côté longitudinal du véhicule V, la direction Y est une direction dite transversale du fait qu'elle est perpendiculaire aux côtés longitudinaux du véhicule V et donc perpendiculaire à la direction longitudinale X, et la direction Z est une direction verticale, perpendiculaire aux directions longitudinale X et transversale Y.

On a schématiquement illustré sur la figure 1, une toute petite partie d'une aile arrière d'un véhicule V (ici de type automobile) équipée d'un exemple de réalisation d'un bloc optique BO selon l'invention (ici un feu arrière).

Comme illustré sur les figures 1 et 2, un bloc optique BO, selon l'invention, comprend un boîtier BB et une glace GL de protection, qui délimitent ensemble un espace interne EI. Ce dernier (EI) loge au moins un premier ensemble d'éléments, comportant notamment une première pièce P1 et participant à une première fonction photométrique, un masque MA participant notamment à cette première fonction photométrique ainsi qu'éventuellement au style, et une deuxième pièce P2 participant à une fonction de catadioptre.

Le boîtier BB est destiné à être solidarisé fixement à une partie de la carrosserie d'un véhicule V (ici une aile arrière). Il est réalisé dans un matériau rigide, comme par exemple une matière plastique ou synthétique. Dans ce cas, il peut être réalisé par moulage.

La glace GL de protection est solidarisée fixement à une partie avant PV du boîtier BB, par exemple par collage, soudage ou vissage. Elle peut, par exemple, être réalisée en verre ou en matière plastique. Par ailleurs, elle peut éventuellement présenter une ou plusieurs couleurs choisies parmi le blanc cristal, le rouge et l'orange.

On entend ici par « partie avant » la partie du boîtier BB qui est orientée vers l'extérieur (ici vers la zone située derrière le véhicule V).

Par exemple, la première fonction photométrique peut être choisie parmi une fonction d'indicateur de changement de direction (ou clignotant) et une fonction de feu de stop (dans le cas d'un feu arrière). Plus généralement, il peut s'agir de n'importe quelle fonction de signalisation ou d'éclairage.

Le premier ensemble d'éléments comprend, par exemple, au moins une première source de rayons lumineux S1, des moyens de contrôle (non représentés et par exemple installés sur une carte à circuits imprimés, éventuellement de type PCB (« Printed Circuit Board »)), la première pièce P1, ainsi qu'éventuellement au moins un élément optique, comme par exemple un réflecteur ou une lentille.

Dans l'exemple illustré non limitativement sur la figure 2, la première source de rayons lumineux S1 comprend une lampe halogène (ou ampoule). Mais en variante elle pourrait comprendre au moins une diode électroluminescente, de type classique (ou LED (« Light-Emitting Diode »)) ou de type organique (ou OLED (« Organic Light-Emitting Diode »)), ou bien au moins une diode laser.

La première pièce P1 est translucide, placée en regard de la glace GL et participe à la première fonction photométrique ainsi qu'éventuellement au style (comme c'est le cas dans l'exemple illustré non limitativement). Elle est éventuellement colorée en rouge ou orange (selon la première fonction photométrique). Par ailleurs, elle peut être réalisée par moulage dans une matière plastique rigide et translucide telle que, par exemple, du polycarbonate (ou PC) ou le poly-méthacrylate de méthyle (ou PMMA).

Le masque MA comprend à un premier niveau (suivant la direction verticale Z) au moins une première ouverture O1 qui est traversée par la première pièce P1.

Le masque MA comprend aussi à un second niveau (suivant la direction verticale Z) différent du premier niveau un méplat MG saillant en direction de la glace GL et comprenant N secondes ouvertures O2, avec N ≥ 2. Dans l'exemple illustré non limitativement sur les figures 1 et 2, le méplat MG s'étend principalement dans le plan XY et les secondes ouvertures O2 peuvent être traversées sensiblement suivant la direction verticale Z. Mais il (MG) pourrait s'étendre principalement dans un plan légèrement incliné par rapport au plan XY.

Par ailleurs, dans l'exemple illustré non limitativement sur les figures 1 et 2, le second niveau est situé au-dessous du premier niveau, car dans le bloc optique BO la fonction de catadioptre est assurée au-dessous de la première fonction photométrique. Mais dans une variante de réalisation non illustrée, le second niveau pourrait être situé au-dessus du premier niveau, afin que la fonction de catadioptre soit assurée au-dessus de la première fonction photométrique.

De plus, dans l'exemple illustré non limitativement sur la figure 1, le masque MA comprend trois (N = 3) secondes ouvertures O2. Mais il pourrait comprendre deux (N = 2) secondes ouvertures O2 ou bien plus de trois secondes ouvertures O2 (par exemple quatre ou cinq).

Ce masque MA peut être réalisé par moulage dans une matière plastique rigide et opaque telle que, par exemple, du polyéthylène (ou PE) ou du polypropylène (ou PP) ou de l'acrylonitrile butadiène styrène (ou ABS) ou du poly-méthacrylate de méthyle (ou PMMA) ou encore du polycarbonate (ou PC).

La deuxième pièce P2 comprend une embase EB et N plaques PC. L'embase EB est placée derrière le méplat MG, afin d'être totalement masquée par ce dernier (MG). Dans l'exemple illustré non limitativement sur les figures 1 et 2, le mot « derrière » signifie au-dessous du méplat MG. Mais dans la variante de réalisation mentionnée trois paragraphes plus haut, le mot « derrière » signifie au-dessus du méplat MG.

Les N plaques PC sont érigées sur l'embase EB, définissent des catadioptres, et traversent respectivement les N secondes ouvertures O2 afin d'être placées en regard de la glace GL au-dessous ou au-dessus de la partie de la première pièce P1 qui traverse chaque première ouverture O1 du masque MA et qui est située en regard de la glace GL.

Afin d'assurer sa fonction de catadioptre, chaque plaque PC comprend une face réfléchissante orientée vers la glace GL. Cette face réfléchissante peut, par exemple, comprendre un facettage.

Dans l'exemple illustré non limitativement sur les figures 1 et 2, les N plaques PC sont situées au-dessous de la première pièce P1, car la fonction de catadioptre est assurée au-dessous de la première fonction photométrique. Mais dans la variante de réalisation mentionnée plus haut, les N plaques PC pourraient être situées au-dessus de la première pièce P1 afin que la fonction de catadioptre soit assurée au-dessus de la première fonction photométrique.

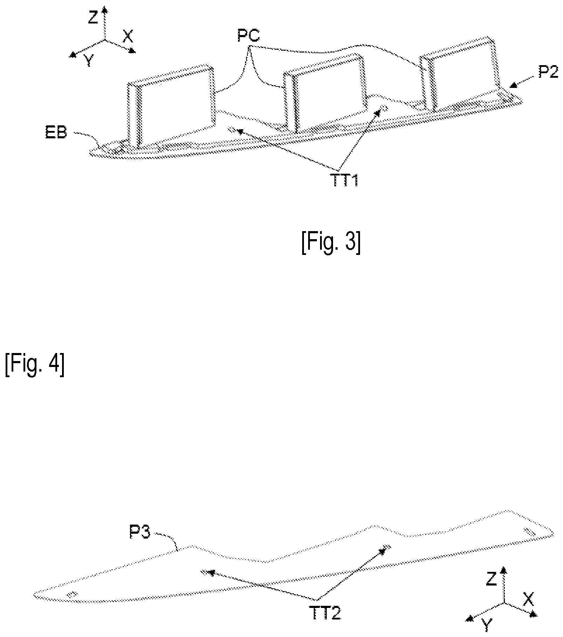

Dans l'exemple illustré non limitativement sur les figures 2 et 3, les N plaques PC sont érigées sensiblement perpendiculairement par rapport à l'embase EB, afin d'être sensiblement placées dans un plan YZ. Mais l'angle entre l'embase EB et les N plaques PC pourrait être différent d'environ 90°.

Grâce à l'invention, la fonction de catadioptre est définie en N parties par une unique pièce (à savoir la deuxième P2), qui, du fait qu'elle traverse le masque MA par ses N secondes ouvertures O2, donne l'impression de flotter par rapport à ce masque MA et donc à l'intérieur du bloc optique BO. Cela permet avantageusement de réduire le nombre de pièces à assembler pour constituer le bloc optique BO, de simplifier le montage de ce dernier (BO) et d'en réduire la durée, et de simplifier la gestion des stocks. En outre, cela permet de faire participer la fonction de catadioptre au style et/ou à la signature du bloc optique BO.

On notera que la deuxième pièce P2 peut être réalisée par moulage dans une matière plastique rigide telle que, par exemple, du polyéthylène (ou PE) ou du polypropylène (ou PP) ou de l'acrylonitrile butadiène styrène (ou ABS) ou encore du polycarbonate (ou PC). Au moins ses N plaques PC présentent une couleur fonction de la législation en vigueur, et par exemple rouge ou orange.

Par exemple, et comme illustré non limitativement sur la figure 1, le masque MA peut comprendre N premières ouvertures O1 traversées respectivement par N sous-parties de la première pièce P1 au-dessous ou au-dessus desquelles sont placées respectivement les N plaques PC. Ainsi, la première fonction photométrique est aussi définie en N fractions, et chacune des N plaques PC est placée au-dessous ou au-dessus de l'une des N sous-parties de la première pièce P1 afin d'offrir une homogénéité de style. Mais, le nombre de premières ouvertures O1 peut prendre n'importe quelle valeur supérieure ou égale à un (1).

On notera également, comme illustré non limitativement sur les figures 2 et 4, que le bloc optique BO peut comprendre une troisième pièce P3 opaque et placée contre une face de l'embase EB, qui est opposée à une autre face de cette dernière (EB) placée contre le méplat MG. Cette option permet avantageusement d'empêcher l'entrée dans l'embase EB de rayons lumineux qui participent à une seconde fonction photométrique au-dessous ou au-dessus de la deuxième pièce P2.

Afin d'empêcher cette entrée de rayons lumineux, la troisième pièce P3 s'étend préférentiellement au moins contre toute la surface de la face de l'embase EB qui est opposée au méplat MG. Comme cela apparaît sur les figures 3 et 4, la troisième pièce P3 et l'embase EB peuvent présenter une même forme.

Cette seconde fonction photométrique est assurée par un second ensemble d'éléments installé dans l'espace interne EI et comprenant au moins une seconde source de rayons lumineux S2, des moyens de contrôle (non représentés et par exemple installés sur une carte à circuits imprimés, éventuellement de type PCB), ainsi qu'éventuellement au moins un élément optique, comme par exemple un réflecteur ou une lentille.

Dans l'exemple illustré non limitativement sur la figure 2, la seconde source de rayons lumineux S2 comprend une lampe halogène (ou ampoule). Mais en variante elle pourrait comprendre au moins une diode électroluminescente, de type classique (ou LED) ou de type organique (ou OLED), ou bien au moins une diode laser.

Par ailleurs, dans l'exemple illustré non limitativement sur les figures 1 et 2, la seconde fonction photométrique est assurée au-dessous de la fonction de catadioptre. Les rayons lumineux générés par la seconde source de rayons lumineux S2 sortent donc du bloc optique BO par une partie inférieure PIG de la glace GL, après être passés sous l'embase EB de la deuxième pièce P2 ou sous l'éventuelle troisième pièce P3. Mais dans la variante de réalisation mentionnée plus haut, la seconde fonction photométrique pourrait être assurée au-dessus de la fonction de catadioptre.

Par exemple, cette seconde fonction photométrique peut être choisie parmi une fonction de feu de circulation diurne (ou DRL (pour « Daytime running Light (or Lamp) » - signalisation lumineuse allumée automatiquement lorsque le véhicule est mis en fonctionnement pendant le jour)) et une fonction de feu de position. Plus généralement, il peut s'agir de n'importe quelle fonction de signalisation ou d'éclairage.

La troisième pièce P3 peut être réalisée par moulage dans une matière plastique rigide et opaque telle que, par exemple, du polyéthylène (ou PE) ou du polypropylène (ou PP) ou de l'acrylonitrile butadiène styrène (ou ABS) ou encore du polycarbonate (ou PC).

Comme illustré non limitativement sur les figures 2 à 4, lorsque le bloc optique BO comprend la troisième pièce P3, la deuxième pièce P2 peut comprendre au moins deux premiers trous traversants TT1 placés en regard respectivement de seconds trous traversants TT2 correspondant et qui sont définis dans la troisième pièce P3. Dans ce cas, le méplat MG peut comprendre, sur sa face masquée qui est orientée vers l'embase EB (ici la face inférieure), au moins deux plots PM masqués et traversant respectivement les premiers TT1 et seconds TT2 trous traversants qui se correspondent. Chaque plot PM comprend une extrémité libre, opposée au méplat MG, et pouvant être écrasée contre une face arrière (ici inférieure) de la troisième pièce P3 afin de masquer entièrement le second trou traversant TT2 correspondant et d'immobiliser étroitement et simultanément les deuxième P2 et troisième P3 pièces par rapport au méplat MG, tout en empêchant le passage vers l'embase EB de rayons lumineux participant à la seconde fonction photométrique.

Ainsi, non seulement on empêche le passage de rayons lumineux parasites de la zone où est assurée la seconde fonction photométrique vers la zone où est assurée la fonction de catadioptre, mais également on solidarise étroitement et fixement les deuxième P2 et troisième P3 pièces au méplat MG, ce qui permet d'éviter d'avoir à prévoir des pattes de fixation sur ces deuxième P2 et troisième P3 pièces et/ou sur le masque MA et/ou sur la face interne du boîtier BB.

Par exemple, chaque extrémité libre d'un plot PM peut être écrasée par bouterollage. Mais en variante chaque extrémité libre d'un plot PM pourrait être écrasée par chauffage (éventuellement au moyen d'un laser).

Dans une autre variante de réalisation, chaque extrémité libre d'un plot PM pourrait ne pas être écrasée, mais clippée contre la face arrière (ici inférieure) de la troisième pièce P3. Dans ce cas, chaque extrémité libre peut, par exemple, comprendre au moins deux sous-parties flexibles ou déformables et terminées chacune par un cran ou une dent anti-retour.

## Revendications

1. Bloc optique (BO) destiné à équiper un véhicule (V) et comprenant un boîtier (BB) définissant avec une glace (GL), solidarisée à une partie avant (PV), un espace interne (EI) logeant un masque (MA) comprenant à un premier niveau au moins une première ouverture (O1) traversée par une première pièce (P1) translucide, placée en regard de ladite glace (GL) et participant à une première fonction photométrique, **caractérisé en ce que** ledit masque (MA) comprend à un second niveau différent dudit premier niveau un méplat (MG) saillant en direction de ladite glace (GL) et comprenant N secondes ouvertures (O2), avec N ≥ 2, et **en ce que** ledit bloc optique comprend en outre une deuxième pièce (P2) comprenant une embase (EB) placée derrière ledit méplat (MG), c'est-à-dire que l'embase est au-dessous du méplat (MG) lorsque ledit second niveau est situé au-dessous dudit premier niveau et que l'embase est au-dessus du méplat (MG) lorsque ledit second niveau est situé au-dessus dudit premier niveau, et sur laquelle sont érigées N plaques (PC) définissant des catadioptres et traversant respectivement lesdites N secondes ouvertures (O2) afin d'être placées en regard de ladite glace (GL) au-dessous ou au-dessus de ladite première pièce (P1).

2. Bloc optique selon la revendication 1, **caractérisé en ce que** ledit masque (MA) comprend N premières ouvertures (O1) traversées par N sous-parties de ladite première pièce (P1) au-dessous ou au-dessus desquelles sont placées respectivement lesdites N plaques (PC).

3. Bloc optique selon la revendication 1 ou 2, **caractérisé en ce qu'**il comprend une troisième pièce (P3) opaque et placée contre une face de ladite embase (EB), qui est opposée à une autre face de cette dernière (EB) placée contre ledit méplat (MG), afin d'empêcher l'entrée dans ladite embase (EB) de rayons lumineux participant à une seconde fonction photométrique au-dessous ou au-dessus de ladite deuxième pièce (P2).

4. Bloc optique selon la revendication 3, **caractérisé en ce que** ladite deuxième pièce (P2) comprend au moins deux premiers trous traversants (TT1) placés en regard respectivement de seconds trous traversants (TT2) correspondant définis dans ladite troisième pièce (P3), et **en ce que** ledit méplat (MG) comprend au moins deux plots (PM) masqués, traversant respectivement lesdits premiers (TT1) et seconds (TT2) trous traversants qui se correspondent, et comprenant chacun une extrémité libre écrasée contre une face arrière de ladite troisième pièce (P3) afin de masquer entièrement le second trou traversant (TT2) correspondant et d'immobiliser étroitement et simultanément lesdites deuxième (P2) et troisième (P3) pièces par rapport audit méplat (MG), tout en empêchant le passage vers ladite embase (EB) de rayons lumineux participant à ladite seconde fonction photométrique.

5. Bloc optique selon la revendication 4, **caractérisé en ce que** chaque extrémité libre d'un plot (PM) est écrasée par bouterollage.

6. Bloc optique selon l'une des revendications 3 à 5, **caractérisé en ce que** ladite seconde fonction photométrique est choisie parmi une fonction de feu de jour et une fonction de feu de position.

7. Bloc optique selon l'une des revendications 1 à 6, **caractérisé en ce que** N est égal à trois.

8. Bloc optique selon l'une des revendications 1 à 7, **caractérisé en ce que** ladite première fonction photométrique est choisie parmi une fonction d'indicateur de changement de direction et une fonction de feu de stop.

9. Bloc optique selon l'une des revendications 1 à 8, **caractérisé en ce qu'**il constitue un feu arrière dudit véhicule (V).

10. Véhicule (V), **caractérisé en ce qu'**il comprend au moins un bloc optique (BO) selon l'une des revendications précédentes.

## Patentansprüche

1. Optische Einheit (BO), die dazu bestimmt ist, ein Fahrzeug (V) auszustatten, und ein Gehäuse (BB) umfasst, das mit einer Glasscheibe (GL), die mit einem Vorderteil (PV) fest verbunden ist, einen Innenraum (EI) definiert, der eine Maske (MA) aufnimmt, die auf einer ersten Ebene mindestens eine erste Öffnung (O1) umfasst, die von einem ersten lichtdurchlässigen Teil (P1) durchquert wird, die gegenüber der Scheibe (GL) angeordnet ist und an einer ersten photometrischen Funktion teilnimmt, **dadurch gekennzeichnet, dass** die Maske (MA) auf einer zweiten, von der ersten Ebene verschiedenen Ebene eine Abflachung (MG) umfasst, die in Richtung der Scheibe (GL) vorspringt und N zweite Öffnungen (O2) umfasst, mit N ≥ 2, und dass die optische Einheit ferner ein zweites Teil (P2) umfasst, das eine Basis (EB) umfasst, die hinter der Abflachung (MG) angeordnet ist, d.h. die Basis befindet sich unter der Abflachung (MG), wenn die zweite Ebene unter der ersten Ebene liegt, und die Basis befindet sich über der Abflachung (MG), wenn die zweite Ebene über der ersten Ebene liegt, und auf der N Platten (PC) errichtet sind, die Rückstrahler definieren und jeweils die N zweiten Öffnungen (O2) durchqueren, um gegenüber der Scheibe (GL) unter oder über dem ersten Teil (P1) angeordnet zu werden.

2. Optischer Block nach Anspruch 1, **dadurch gekennzeichnet, dass** die Maske (MA) N erste Öffnungen (O1) umfasst, die von N Unterteilen des ersten Teils (P1) durchquert werden, unterhalb oder oberhalb derer jeweils die N Platten (PC) angeordnet sind.

3. Optischer Block nach Anspruch 1 oder 2, **dadurch gekennzeichnet, dass** er ein drittes Teil (P3) umfasst, das lichtundurchlässig ist und an einer Seite des Sockels (EB) angeordnet ist, die einer anderen Seite des Sockels (EB) gegenüberliegt, die an der Abflachung (MG) angeordnet ist, um den Eintritt von Lichtstrahlen in den Sockel (EB) zu verhindern, die an einer zweiten photometrischen Funktion unter oder über dem zweiten Teil (P2) beteiligt sind.

4. Optischer Block nach Anspruch 3, **dadurch gekennzeichnet, dass** das zweite Teil (P2) mindestens zwei erste Durchgangslöcher (TT1) umfasst, die jeweils gegenüber entsprechenden zweiten Durchgangslöchern (TT2) angeordnet sind, die in dem dritten Teil (P3) definiert sind, und dass die Abflachung (MG) mindestens zwei verdeckte Noppen (PM) umfasst, die jeweils durch die ersten (TT1) und zweiten (TT2) Durchgangslöcher verlaufen, die einander entsprechen, und jeweils ein freies Ende umfassen, das gegen eine Rückseite des dritten Teils (P3) gequetscht ist, um das entsprechende zweite Durchgangsloch (TT2) vollständig zu maskieren und das zweite (P2) und dritte (P3) Teil in Bezug auf die Abflachung (MG) eng und gleichzeitig zu fixieren, während der Durchgang von Lichtstrahlen, die an der zweiten photometrischen Funktion teilnehmen, zu dem Sockel (EB) verhindert wird.

5. Optischer Block nach Anspruch 4, **dadurch gekennzeichnet, dass** jedes freie Ende eines Klotzes (PM) durch Bouterollage gequetscht ist.

6. Optischer Block nach einem der Ansprüche 3 bis 5, **dadurch gekennzeichnet, dass** die zweite photometrische Funktion aus einer Tagfahrlichtfunktion und einer Positionslichtfunktion ausgewählt ist.

7. Optischer Block nach einem der Ansprüche 1 bis 6, **dadurch gekennzeichnet, dass** N gleich drei ist.

8. Optische Einheit nach einem der Ansprüche 1 bis 7, **dadurch gekennzeichnet, dass** die erste photometrische Funktion aus einer Abbiegeanzeigefunktion und einer Bremslichtfunktion ausgewählt ist.

9. Optische Einheit nach einem der Ansprüche 1 bis 8, **dadurch gekennzeichnet, dass** sie eine Rückleuchte des Fahrzeugs (V) bildet.

10. Fahrzeug (V), **dadurch gekennzeichnet, dass** es mindestens eine optische Einheit (BO) nach einem der vorhergehenden Ansprüche umfasst.

## Claims

1. Optical unit (BO) intended to be fitted to a vehicle (V) and comprising a housing (BB) defining with a lens (GL), fixed to a front part (PV), an internal space (EI) housing a mask (MA) comprising at a first level at least a first opening (O1) through which a first translucent part (P1) passes, placed opposite said lens (GL) and participating in a first photometric function, **characterized in that** said mask (MA) comprises at a second level different from said first level a flat (MG) projecting in the direction of said lens (GL) and comprising N second openings (O2), with N ≥ 2, and **in that** said optical block further comprises a second part (P2) comprising a base (EB) placed behind said flat (MG), that is to say that the base is below the flat (MG) when said second level is located below said first level and that the base is above the flat (MG) when said second level is located above said first level, and on which are erected N plates (PC) defining reflectors and respectively passing through said N second openings (O2) so as to be placed facing said glass (GL) below or above said first part (P1).

2. Optical block according to claim 1, **characterized in that** said mask (MA) comprises N first apertures (O1) traversed by N subparts of said first part (P1) below or above which are respectively placed said N plates (PC).

3. Optical block according to claim 1 or 2, **characterized in that** it comprises a third opaque part (P3) placed against one face of said base (EB), which is opposite to another face of the latter (EB) placed against said flat (MG), in order to prevent the entry into said base (EB) of light rays participating in a second photometric function below or above said second part (P2).

4. Optical block according to claim 3, **characterized in that** said second part (P2) comprises at least two first through holes (TT1) placed respectively opposite corresponding second through holes (TT2) defined in said third part (P3), and **in that** said flat (MG) comprises at least two masked studs (PM), passing respectively through said first (TT1) and second (TT2) through holes which correspond to each other, and each comprising a free end crushed against a rear face of said third part (P3) in order to entirely mask the corresponding second through hole (TT2) and to tightly and simultaneously immobilize said second (P2) and third (P3) parts with respect to said flat (MG), while preventing the passage towards said base (EB) of light rays participating in said second photometric function.

5. Optical block according to claim 4, **characterized in that** each free end of a pad (PM) is crushed by bonding.

6. Optical block according to one of claims 3 to 5, **characterized in that** said second photometric function is chosen from a daytime running light function and a position light function.

7. An optical block according to any of claims 1 to 6, **characterized in that** N is equal to three.

8. An optical block according to one of claims 1 to 7, **characterized in that** said first photometric function is selected from a turn signal function and a stop light function.

9. An optical unit according to one of claims 1 to 8, **characterized in that** it constitutes a rear light of said vehicle (V).

10. Vehicle (V), **characterized in that** it comprises at least one optical unit (BO) according to one of the preceding claims.
